# EUROPEAN PATENT APPLICATION

(11) **EP 4 715 494 A1**
(43) Date of publication of application: **25.03.2026**
(21) Application number: 24202327.3
(22) Date of filing: 24.09.2024
(51) Int. Cl.: G05B 15/02, H05B 47/105, H05B 47/155, G06V 10/141, H05B 45/10

(54) **METHOD, DEVICE, AND ARRANGEMENT FOR OPTIMISING LIFE CYCLES OF DEVICES IN BUILDING AUTOMATION SYSTEMS**

(71) Applicant: Helvar Oy Ab, 02150 Espoo (FI)
(72) Inventor: Juslén, Henri, 02150 ESPOO (FI); Vesterinen, Matti, 02150 ESPOO (FI); Oo, Thet, 02150 ESPOO (FI)
(74) Representative: Papula Oy

(57) **Abstract**

An arrangement comprises a communications unit (501) configured to receive and transmit data, a processor unit (502) coupled to said communications unit (501), and one or more data storages (503) to store received use data indicative of accumulated use of said plurality of node devices. The processor unit (502) is configured to estimate (1304), based on said received use data, remaining service lives of at least a subset of said plurality of node devices, and to generate (1306), based on said estimated remaining service lives, at least one compensation rule determining updated node device operation. The compensation rule aims at lowering power consumption during subsequent use of at least a first one of said plurality of node devices for which the respective estimated remaining service life was shorter than average.

## Description

### FIELD OF THE INVENTION

The invention is related to the field of controlling a building automation network, such as an intelligent lighting system for example. In particular, the invention is related to controlling such a building automation network in a way that compensates for differences in expected service life caused by environmental factors.

### BACKGROUND OF THE INVENTION

Building automation networks and building automation systems are aggregates of electronic devices that may be coupled to each other in various ways to provide services to users in a constructed environment. The concepts are used interchangeably, but a building automation system may also be considered as a larger umbrella concept that may include a plurality of building automation networks.

Each electronic device can be expected to perform adequately for a certain period of time, referred to as its service life, operational life, or useful life. Sooner or later, inevitable factors like general material ageing, accumulated radiation damage and other microscopic defects in semiconductor lattices, drying out of electrolytic capacitors, or the like cause the electronic device to fail. Manufacturers of electronic devices typically announce an expected service life of their products, for example as a number of active operating hours. Maintaining the proper operation of building automation systems and networks involves replacing old electronic devices, preferably in a somewhat proactive manner so that users would not become too annoyed by luminaires or other electronic devices that fail and cause inconvenience.

Maintenance is often called only after there occurs a noticeable failure, like a luminaire failing to light up, beginning to blink annoyingly, or otherwise not providing light in the way it should. If the luminaires or other devices have an EOL (End-Of-Life) warning function that can send out an indication of an imminently expected failure and if such indications are appropriately noted, devices that approach the end of their useful service life can be replaced proactively.

A large building automation network may comprise dozens or hundreds of node devices, and a building automation system may comprise a plurality of building automation networks. Maintaining proper operation may thus be quite burdensome, in particular when the luminaires and other node devices are in the final part of their service life. Solutions would be welcome that would make such maintenance easier and less costly.

### SUMMARY

It is an objective to present methods, devices, and arrangements that enable optimizing life cycles of devices in building automation networks so that there would be less variation in the lengths of useful service lives of different devices.

These and other advantageous objectives are met by utilizing use data and possibly also temperature data of devices to estimate their remaining service lives, and by applying compensation rules that change the operation of devices so that their estimated remaining service lives would converge better.

According to a first aspect, there is provided an arrangement for controlling a plurality of node devices of a building automation network. The arrangement comprises a communications unit configured to receive and transmit data, a processor unit coupled to said communications unit, and at the disposal of the processor unit, one or more data storages. These are configured to store received use data indicative of accumulated use of said plurality of node devices. The processor unit is configured to estimate, based on said received use data, remaining service lives of at least a subset of said plurality of node devices, and generate, based on said estimated remaining service lives, at least one compensation rule determining updated node device operation, which compensation rule aims at lowering power consumption during subsequent use of at least a first one of said plurality of node devices for which the respective estimated remaining service life was shorter than average. The processor unit is configured to transmit the generated compensation rule through said communications unit.

According to an embodiment, the arrangement comprises, at the disposal of the processor unit, one or more data storages configured to store received temperature data indicative of temperatures at which said accumulated use took place. The processor unit may then be configured to perform the estimating of remaining service lives of at least a subset of the plurality of node devices based also on the received temperature data. This involves at least the advantage that environmental conditions under which the use took place can be taken into account, resulting in more accurate estimates of remaining service lives.

According to an embodiment, the processor unit is configured to generate, based on said estimated remaining service lives, at least one further compensation rule determining further updated node device operation. The further compensation rule may aim at increasing power consumption during subsequent use of at least a second one of said plurality of node devices for which the respective estimated remaining service life was not as short as for the first one. The processor unit may then be configured to transmit the generated further compensation rule through said communications unit. This involves at least the advantage that a decreasing amount of light caused by the first compensation rule can be made up for.

According to an embodiment, the arrangement comprises, at the disposal of the processor unit, at least one location data storage configured to store location data indicative of at least relative locations of said plurality of node devices. The processor unit may then be configured to use said location data in generating at least said compensation rule. This involves at least the advantage that the compensating for otherwise declining level of service can be focused on areas at which it is needed most.

According to an embodiment, the processor unit is configured to use said location data to generate said compensation rule and said further compensation rule so that the increasing power consumption by the second node device causes improved level of service at a second area that at least partly coincides with a first area at which the lowering power consumption by the first node device weakens level of service. This involves at least the advantage that the compensating for otherwise declining level of service can be focused on areas at which it is needed most.

According to an embodiment, said node devices are luminaires and said compensation rule involves a lower lighting level when switched on, a lower lighting level when operating as a part of a pre-programmed scene, a scaled-down dimming curve, a dimming curve with at least one lowered section, at least partly lower contribution to a combination of detected ambient light and artificial light emitted by the first one of said plurality of luminaires, a fading curve with at least one scaled-down section, and/or a lowered power directed to a part of light emitters included in the first one of said plurality of luminaires. This involves at least the advantage that versatile possibilities exist for implementing the desired change in estimated remaining service life.

According to a second aspect, there is provided a device for controlling a node device, for operation as a part of a building automation network. The device comprises a processor unit and, at the disposal of the processor unit, one or more data storages configured to store at least use data indicative of accumulated use of said node device. The processor unit is configured to estimate, based on said use data, remaining service life of said node device, and generate, based on said estimated remaining service life, at least one compensation rule determining updated node device operation, which compensation rule aims at changing power consumption during subsequent use of said node device in a direction that changes the estimated remaining service life towards a target value. The processor unit is configured to control operation of said node device in accordance with said compensation rule.

According to an embodiment, the device comprises, at the disposal of the processor unit, one or more data storages configured to store temperature data indicative of temperatures at which said accumulated use took place. The processor unit may then be configured to perform said estimating of remaining service life of said nod device also based on said temperature data. This involves at least the advantage that environmental conditions under which the use took place can be taken into account, resulting in more accurate estimates of remaining service lives.

According to an embodiment, the device comprises, coupled to said processor unit, a communications unit configured to receive and transmit data. The processor unit may then be configured to transmit information indicative of said use data and said temperature data, and/or said estimated remaining service life. The processor unit may also be configured to receive information indicative of use data and temperature data transmitted by other node devices of said building automation network, and/or information indicative of estimated remaining service lives transmitted by other node devices of said building automation network. The processor unit may also be configured to base said generating of the compensation rule at least partly on the information received from said other node devices of said building automation network. This involves at least the advantage that the device can take the corresponding operation of other devices around into account when deciding about compensation rules.

According to an embodiment, the processor unit is configured to examine said information received from said other node devices for indications of physical closeness of said other luminaires, and weigh said information received from said other node devices of said building automation network the more in said generating of the compensation rule the closer said other node devices are according to said indications of physical closeness. This involves at least the advantage that the device may emphasize closely neighbouring devices in deciding about the compensation rules.

According to a third aspect, there is provided a method for controlling a plurality of node devices of a building automation network. The method comprises receiving and storing use data indicative of accumulated use of said plurality of node devices and estimating, based on said use data, remaining service lives of at least a subset of said plurality of node devices. The method comprises generating, based on said estimated remaining service lives, at least one compensation rule determining updated node device operation, which compensation rule aims at lowering power consumption during subsequent use of at least a first one of said plurality of node devices for which the respective estimated remaining service life was shorter than average. The method comprises transmitting the generated compensation rule to said first one of said plurality of node devices.

According to an embodiment, the method comprises receiving and storing temperature data indicative of temperatures at which said accumulated use took place. The estimating of remaining service lives of at least a subset of said plurality of node devices may then be also based on said temperature data. This involves at least the advantage that environmental conditions under which the use took place can be taken into account, resulting in more accurate estimates of remaining service lives.

According to an embodiment, the method comprises generating, based on said estimated remaining service lives, at least one further compensation rule determining further updated node device operation, which further compensation rule aims at increasing power consumption during subsequent use of at least a second one of said plurality of node devices for which the respective estimated remaining service life was not as short as for the first one. The method may then comprise transmitting the generated further compensation rule to said second one of said plurality of node devices. This involves at least the advantage that a declining level of service caused by the first compensation rule can be made up for.

According to an embodiment, the method comprises the use of location data of said plurality of node devices to generate said compensation rule and said further compensation rule so that the increasing power consumption power by the second node device causes improving level of service at a second area that at least partly coincides with a first area at which the lowering power consumption by the first node device weakens level of service. This involves at least the advantage that a declining level of service caused by the first compensation rule can be made up for.

According to an embodiment, the node devices are luminaires and the compensation rule involves a lower lighting level when switched on, a lower lighting level when operating as a part of a pre-programmed scene, a scaled-down dimming curve, a dimming curve with at least one lowered section, at least partly lower contribution to a combination of detected ambient light and artificial light emitted by the first one of said plurality of luminaires, a fading curve with at least one scaled-down section, and/or a lowered power directed to a part of light emitters (included in the first one of said plurality of luminaires. This involves at least the advantage that versatile possibilities exist for implementing the desired change in estimated remaining service life.

According to a fourth aspect, there is provided a method for controlling a node device for operation as a part of a building automation network. The method comprises storing use data indicative of accumulated use of said node device and estimating, based on said use data, remaining service life of said node device. The method comprises generating, based on said estimated remaining service life, at least one compensation rule determining updated node device operation, which compensation rule aims at changing power consumption during subsequent use of said node device in a direction that changes the estimated remaining service life towards a target value. The method comprises controlling operation of said node device in accordance with said compensation rule.

According to an embodiment, the method comprises storing temperature data indicative of temperatures at which said accumulated use took place. Said estimating of remaining service life may then be also based on said temperature data. This involves at least the advantage that environmental conditions under which the use took place can be taken into account, resulting in more accurate estimates of remaining service lives.

According to an embodiment, the method comprises transmitting information indicative of said use data and said temperature data, and/or said estimated remaining service life. The method may then comprise receiving information indicative of use data and temperature data transmitted by other node devices of said building automation network, and/or information indicative of estimated remaining service lives transmitted by other node devices of said building automation network. The method may comprise basing said generating of the compensation rule at least partly on the information received from said other node devices of said building automation network. This involves at least the advantage that the device can take the corresponding operation of other devices around into account when deciding about compensation rules.

According to an embodiment, the node device is a luminaire and the compensation rule involves a lower lighting level when switched on, a lower lighting level when operating as a part of a pre-programmed scene, a scaled-down dimming curve, a dimming curve with at least one lowered section, a lowered power directed to a part of light emitters included in the luminaire, and/or at least partly lower contribution to a combination of detected ambient light and artificial light emitted by the luminaire. This involves at least the advantage that versatile possibilities exist for implementing the desired change in estimated remaining service life.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates luminaires in a large indoor space,
**figure 2** illustrates a luminaire and other devices as parts of a lighting system,
**figure 3** illustrates a building automation network,
**figure 4** illustrates a building automation network,
**figure 5** illustrates a control device or arrangement,
**figure 6** illustrates an example of compensation rules,
**figure 7** illustrates an example of compensation rules,
**figure 8** illustrates an example of compensation rules,
**figure 9** illustrates an example of compensation rules,
**figure 10** illustrates an example of compensation rules,
**figure 11** illustrates an example of compensation rules,
**figure 12** illustrates an example of compensation rules,
**figure 13** illustrates a method, and
**figure 14** illustrates a method.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

When the components of the lighting system are in the final part of their service life, maintenance personnel begin to get service requests more and more often. Repeated maintenance visits cause costs, so it would be beneficial if there were some means for ensuring that node devices of a building automation network would reach the end of their service life in a somewhat synchronized manner. This would enable replacing larger numbers of devices at the same time, while simultaneously ensuring that no such devices are scrapped prematurely that would still have a significant part of their actual service life remaining.

Luminaires are described as examples of node devices of a building automation network. However, the following description can be readily generalized to other kinds of node devices that include electronic circuitry, the ageing of which may be affected by temperature and other environmental factors. Examples of such other kinds of node devices include, but are not limited to, sensors, control panels, control devices, heaters, air conditioners, window blind operating devices, access control devices, and intruder detection devices. In general, the following description is applicable to node devices that operate as parts of a building automation network that enables device-to-device communications, with additional advantages being available if the location and function of the node devices are such that one node device (or a first plurality of node devices) can at least partly take on the responsibility for providing a service to users that was previously provided by another node device (or a second plurality of node devices).

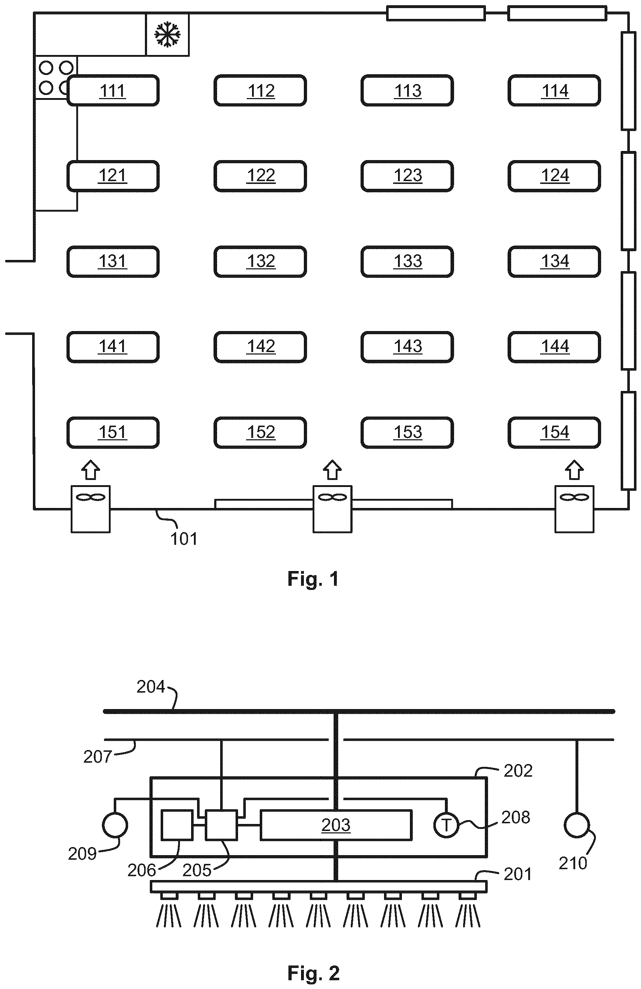

Fig. 1 illustrates a plurality of luminaires 111 to 154 that form part of a building automation network. In this example, the luminaires are all like each other, i.e. they have the same basic technical characteristics. Consequently, they can all have the same expected service life. They are also all located in the same indoor space 101 and meant to provide general illumination in the indoor space 101. Fig. 1 is a general floor plan of the indoor space 101, and the luminaires 111 to 154 may be installed at the ceiling or they may hang from the ceiling relatively high up in the indoor space 101.

Even if the luminaires 111 to 154 would all be used in the same way, i.e. always held on at the same time at the same power as all others, they will probably run at different temperatures. High temperature is an important factor that may shorten the service life of leds and other electronics typically included in luminaires. Luminaires 113, 114, 124, 134, 144, and 154 are close to windows and may be exposed to direct sunlight more than the other luminaires, making them run hotter. Alternatively, if the weather is cold and the windows let in a lot of draught, said luminaire may run colder than the others. Luminaire 111 is close to heat-generating devices such as a cooker and a freezer, again making the luminaire run hotter than the other luminaires. On the other hand, luminaires 151, 152, 153, and 154 are close to the air conditioning inlets of the room, which may make them run colder than the other luminaires whenever the air conditioning is on.

In addition to mere usage, also differences in average operating temperature may result also from the way in which the luminaires or other node devices are used. For example, luminaires 152 and 153 are closest to a large whiteboard on the wall. At times when presentations are held, the lighting in the room may be switched to a presentation scene where luminaires 152 and 153 are at 100% power, luminaires 151 and 154 at 80% power, and all other luminaires at 30% power. If that happens frequently, luminaires 152 and 153 (and, at least to some extent, luminaires 151 and 154) may accumulate significantly more operating hours at elevated temperatures than the other luminaires, as waste heat generated in the luminaires scales with operating power with some approximate proportionality.

As a result of the accumulated operating hours, possibly at different temperatures, the actual expected service lives of the luminaires 111 to 154 may gradually begin to differ from each other, leading to the problems explained earlier in this text. Similar diverging of expected service lives may apply to other kinds of node devices of building automation networks as well.

Fig. 2 illustrates an example of a luminaire and some associated sensor devices. The luminaire comprises a led module 201 and a driver 202. In conformity with the common terminology on the field, a driver 202 is an electronic device tasked with providing a regulated amount of operating power to the led module 201. As parts of a driver 202, a power converter 203 is configured to convert input power from a power bus or an electricity distribution grid 204 into operating power of the led module 201 at appropriate voltage and current values. A processor 205 executes a program stored in a memory 206, controlling the operation of the power converter 203 in accordance with control commands it receives from a control bus 207. Fig. 2 should be construed as a schematic example, so that e.g. the control bus 207 represents all possible ways of enabling appropriate part(s) of the driver to communicate with other devices of a building automation network.

The driver 202 may comprise one or more internal temperature sensors 208 coupled to the processor 205 so that the processor 205 may obtain and store temperature readings indicative of internal operating temperatures that may affect the ageing of electronics. Additionally, or alternatively, the processor 205 may store temperature data in indirect form, for example as operating power readings that tell, at which power level(s) the power converter 203 has delivered operating power to the led module 201. As losses in the power converter 203 are at least approximately proportional to the level of power delivered to the led module 201, operating power readings offer at least an approximate indication of internal operating temperature of the power converter 203.

Additionally, or alternatively, the luminaire may be equipped with one or more external sensors 209 in communicative coupling with the processor 205. While the external sensor(s) 209 may be configured to sense a plurality of quantities like user presence for example, they may also comprise means for providing the processor 205 with temperature readings indicative of ambient temperature at or close to the location where the luminaire is installed. Additionally, or alternatively, the lighting system (or other kind of building automation network) may comprise one or more standalone sensors 210 that may provide temperature readings indicative of ambient temperature through, for example, the same control bus 207 through which the processor 205 communicates with other devices coupled thereto. External sensors 209 are an example of node devices of building automation systems to which the description in this text can be generalized so that it is not limited to just luminaires.

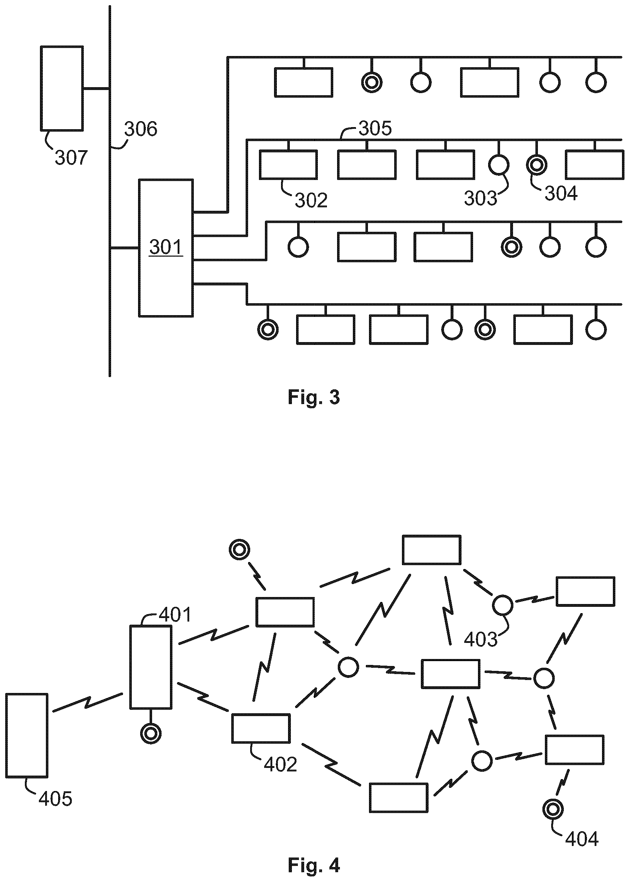

Fig. 3 illustrates an example of device hierarchy and communications in a building automation network, which here includes at least a lighting system. A lighting controller 301 may act as a master device, controlling the operation of luminaires 302, sensors 303, and operating panels or switches 304. All said devices are node devices of the building automation network. In the example of fig. 3, the lighting controller 301 operates four subnets, each having a control bus 305 of its own as means for communications between the devices coupled thereto. The lighting controller 301 may be coupled to an external backbone network 306, such as an Ethernet network for example, through which it may communicate with other devices like a remote management station 307. From the viewpoint of the building automation network, the remote management station 307 may be considered to constitute a cloud-based service as its location or device configuration is not important but only the service(s) that can be obtained therethrough.

Fig. 4 illustrates another example of device hierarchy and communications in a building automation network, which also here includes at least a lighting system. In fig. 4, the devices of the building automation network communicate wirelessly, using a suitable wireless communications standard such as Bluetooth, BLE (Bluetooth Low Energy), ZigBee, RFID, WiFi, or the like. It is possible that a wireless building automation network operates completely without centralized control, particularly if the devices in it have some self-learning capability that allows them to adapt to various patterns of use. In the example of fig. 4, the wireless building automation network comprises a gateway device 401, luminaires 402, sensors 403, and operating panels or switches 404. The gateway device may have a (wired or wireless) communications coupling with a remote management station 405.

For better understanding the ways of optimizing life cycles described in this text, some background of lighting control may be reiterated. The following description is easily generalized to the control of other kinds of node devices in a building automation system, keeping in mind the dedicated ways of operation pertinent to such other kinds of node devices.

Simplest form of lighting control involves switching lights on and off, so that a luminaire that is switched on emits light at some nominal full power. In a system like that of fig. 3, a luminaire 302 receives switch-on and switch-off commands from the lighting controller 301, which may transmit them in response to various triggering events like a switch having been operated, a sensor having detected movement, a preprogrammed switching time having come, or the like. The same is true in a system like that of fig. 4, as only the way in which the devices communicate is different.

Another example of lighting control involves preprogrammed scenes. Scenes may have been preprogrammed to the (drivers of the) luminaires during a configuration stage. In such a case, when the lighting controller broadcasts to a group of luminaires a command to launch a particular scene, each luminaire in the group goes to a preprogrammed lighting level it knows to associate with that scene. As an alternative, the scenes can be preprogrammed to the lighting controller, so that when a user operates a scene button and the lighting controller gets an indication thereof, the lighting controller reads from its memory the luminaire-specific illumination levels that make up that scene and transmits the corresponding commands to individual luminaires.

Another example of lighting control involves dimming levels and/or dimming curves. Each (driver of a) luminaire may have a preprogrammed dimming curve stored in its memory, associating relation-type commands like percentages with corresponding desired levels of illumination. When a lighting controller orders either an individual luminaire or a group of luminaires to dim to, say, 60%, the luminaire(s) set their light output to the level that corresponds to 60% in their preprogrammed dimming curve.

Another example of lighting control involves daylight harvesting. A (driver of a) luminaire may have an associated light sensor that detects the amount of ambient light, like sunlight, within the area that can also be illuminated with the luminaire. After receiving the detection result from the sensor, the driver sets the light output to a level that together with the detected amount of ambient light amounts to a preprogrammed total level.

Another example of lighting control involves the use of a fading curve. A luminaire that receives a switch-on command from a lighting controller or from a movement sensor, or a luminaire that receives an indicative wireless transmission from a nearby other luminaire, may switch or tune up to a preprogrammed illumination level in accordance with a rising edge of its fading curve. If the same luminaire subsequently receives a fade-out or switch-off command or, in a system equipped with movement sensors, there are no further detections of movement within a preprogrammed period, the luminaire may begin to fade out according to a falling edge of its fading curve. Typically, parametric descriptors of the fading curve, like the duration and level of sections of the curve and the transitions between levels, can be programmed to the memory of the driver of the luminaire.

In this description, the aim is to optimize life cycles of luminaires and/or other node devices of building automation network so that their expected service lives, estimated based on accumulated use, would converge towards a common target value. In other words, optimizing life cycles means that luminaires (or other node devices) that appear to have undergone faster ageing are given some easement in future use, to at least partly mitigate the effects that previously have caused the accelerated ageing. Preferably, this should cause the least possible noticeable effect for users. If needed, those other luminaires (or other node devices) that appear to have undergone slower ageing may be assigned some heavier responsibilities in future use to compensate for the effects that users could otherwise notice as a result of the easements given to the devices that appeared to have aged faster. The evaluation of occurred ageing may take into account environmental factors like temperature.

In a simple form, life cycles may be optimized by noting how much each device has been used, and possibly also how hot each of the monitored devices has run in the past, and taking action that should make them run less (and/or less hot) in the future. Operating temperature is certainly a circumstance that affects ageing, so more accurate estimation of remaining service life becomes possible if one takes also temperature into account. Correspondingly, devices that appear to have run relatively cool can be run somewhat hotter in the future, if needed. Examples of affecting the temperature at which each of the devices should run in the future will be described in more detail later in this text.

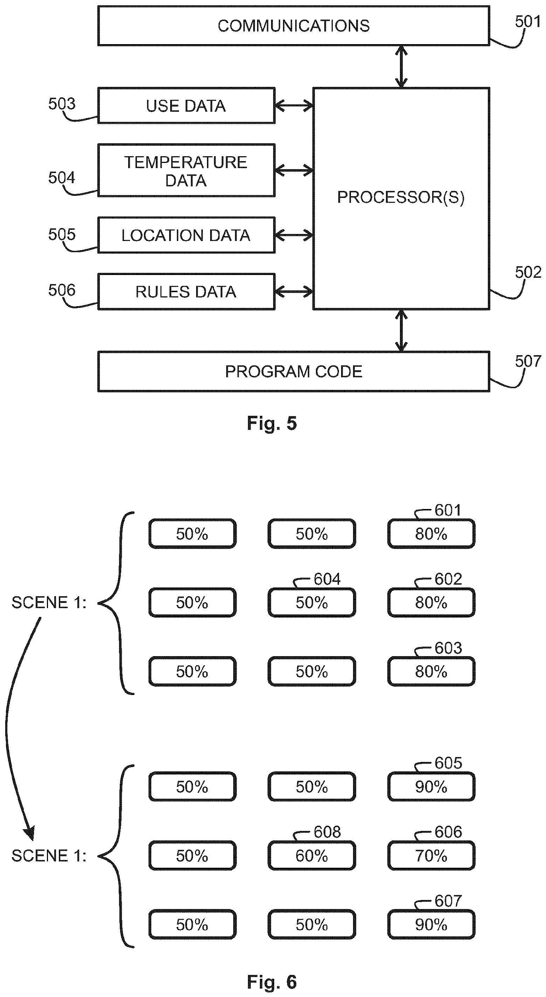

Optimizing life cycles requires giving appropriate tasks to an arrangement. An example of such an arrangement is shown in fig. 5. As such, the arrangement tasked with optimizing life cycles does not have to consist of any single piece of equipment, but the appropriate functionalities may be distributed between two or more apparatuses. Examples of such distributing are described later in this text. Therefore, the following description of the arrangement for controlling a plurality of luminaires of a building automation network should be considered as a general description of all possible physical forms that such an arrangement may take, and the description should be understood as an example that can be generalized to the controlling of other kinds of node devices in a building automation network.

To keep track of accumulated use of the plurality of node devices and to be able to affect their future operation, the arrangement must be able to receive and transmit data. For this purpose, the arrangement shown in fig. 5 comprises a communications unit 501 configured to receive and transmit data. The physical implementation of reception and transmission, like wired and/or wireless or the protocol(s) used, is not important. Also, for the purposes described here, it is irrelevant whether the communications unit 501 can communicate directly with said plurality of node devices or whether the communications go through some intermediate device(s), like a lighting controller or router for example if the node devices are parts of a lighting system. As a non-limiting example, we may assume that the arrangement of fig. 5 is a part of a cloud-based remote management service offered for operators of building automation networks. In such a case, the communications unit 501 would comprise the components and functionalities that are needed to establish and maintain data communications to and from remotely located building automation networks over long distances. As an example, the communications unit 501 may be a communications network interface of a computer (or system of interlinked computers) operating in a server room of an operator of cloud-based services.

The arrangement comprises a processor unit 502 coupled to the communications unit 501. The processor unit 502 may comprise one or more processors, each having one or more processor cores. Again, the actual physical implementation of the processor unit 502 is irrelevant as long as it is capable of processing data in the way described in this text.

The arrangement comprises, at the disposal of the processor unit 502, one or more data storages. Being at the disposal of the processor unit 502 means that the processor unit 502 can store data into and read data from the data storages. The data storages can comprise memory units within the processor unit 502 itself, and/or memory units external to the processor unit 502. A non-limiting example of a data storage is a set of solid-state memory circuits in a memory module connected to a memory connector on the printed circuit board supporting also the processor(s) of the processor unit 502. At least a part of the data storage may be at a location remote to the processor unit 502. The one or more data storages may involve distributed storing of data, meaning that fig. 5 and the following description involving stored data should be construed as functional rather than as a reference to some physical implementation of memory.

For the purposes of optimizing life cycles of lighting devices or other node devices, the one or more data storages are configured to store received user data indicative of accumulated use of the plurality of node devices, the life cycles of which are to be optimized. Additionally, the one or more data storages may be configured to store received temperature data indicative of temperatures at which said accumulated use took place. Both the use data and the temperature data may have been received through the communications unit 501. The division into a first data storage 503 configured to store use data and a second data storage 504 configured to store temperature data is conceptual in fig. 5 and does not mean that there should be two somehow separate data storages for these purposes.

The actual form of stored use data and stored temperature data is not important, as long as it allows making reliable conclusions about the relative ageing so far of the luminaires or other node devices, the life cycles of which are to be optimized. An example of use data is a number indicative of the total accumulated on-time of a node device such as a luminaire. Another example of use data is a collection of time-stamped operating commands that a controlling device has given to the node device. Considering a luminaire of the kind that was schematically shown in fig. 2, in many cases the processor 205 of the driver 202 maintains a use log, the contents of which are accessible for a lighting controller coupled to the same control bus 207 as the luminaire. If an arrangement of the kind shown in fig. 5 is implemented in (or at least comprises parts of) such a lighting controller, the data storage 503 configured to store use data may be a memory into which the lighting controller has stored data it has read from the use logs of the appropriate drivers. Alternatively, or additionally, the data storage 503 configured to store use data may at least partly consist of the data-storing capacity in each driver, from which a processor in a lighting controller can fetch stored used data when needed. In a cloud-based implementation, the data storage 503 may be a memory in which the remote management computer stored such data received from lighting controller(s) over a long-distance communications connection.

An example of temperature data is a collection of time-stamped temperature readings that the processor unit 502 can appropriately associate with the use of the node devices indicated by the use data. Such temperature readings may originate from respective internal temperature sensors in the node device, like the drivers of luminaires, the life cycles of which are to be optimized (see sensor 208 in fig. 2). Alternatively, or additionally, such temperature readings may originate from temperature sensors external to the node devices (see sensors 209 and 210 in fig. 2). Such external sensors may also themselves be node devices, life cycles of which are to be optimized. Alternatively, or additionally, the temperature data may comprise indirect temperature data such as data about the power levels at which the accumulated use indicated by the use data has taken place. Alternatively, or additionally, the temperature data may comprise combined data records in which each piece of use data has an unambiguously associated temperature reading stored in the same data record.

In fig. 5, the one or more data storages at the disposal of the processor unit 502 comprise also at least one location data storage 505 configured to store location data indicative of at least relative locations of the plurality of node devices. Location data indicative of relative locations means information based on which it is possible to know, in some way or another, which node devices are close to each other, and which are far from each other. For example, for each luminaire, there may be stored a group of identifiers that identify a corresponding group of the nearest neighbouring luminaires. Alternatively, or additionally, distances between neighbouring luminaires may be stored. Alternatively, or additionally, location data indicative of relative locations may mean information about which luminaires are installed in a common illuminated space with each other.

Alternatively, or additionally, the stored location data may be indicative of absolute locations of the plurality of node devices, such as coordinate values in an appropriate coordinate system. Location data indicative of absolute locations means all kinds of data based on which it is possible to know where a particular node device is installed, without having to know anything about the locations of other node devices in the same building automation network.

In fig. 5, the one or more data storages at the disposal of the processor unit 502 comprise also at least one rules data storage 506 configured to store at least compensation rules that aim at changing power consumption during subsequent use of at least one of the node devices in a direction that changes an estimated remaining service life of such a node device towards a target value. Detailed examples of compensation rules are provided later in this text.

For the purposes of optimizing life cycles of lighting devices, the processor unit 502 is configured to estimate, based on received use data (and possibly also received temperature data), remaining service lives of at least a subset of the plurality of node devices of which it has received use data (and possibly temperature data). There are various ways of making such estimates. Accumulated use-hours is already a good basis, as an estimate can be made simply by subtracting the number of accumulated use-hours from the number of use-hours in the service life of default length. Assuming that the processor unit 502 knows the type of node device in question, it may also have tabulated data at its disposal about the effect of temperature on the expected ageing rate of just that type of node device. As an illustrative example, a manufacturer of the node device may have announced that if run at temperatures not exceeding a predetermined nominal value, the node device will have a useful service life of 60 000 hours but any temperature of X degrees above the nominal value will make the corresponding use-hour (or use-minute, or use-second) count as (1 + X*0.1) use-hours (or use-minutes, or use-seconds). The coefficient 0.1 may have some different value, based on existing knowledge of how temperature affects the ageing of the kind of electronics in question. The formula may also be non-linear, so that the amount by which the actual use-hour (or use-minute, or use-second) is made to count is non-linearly larger the higher the temperature. Using some similar predetermined formulae, it is relatively straightforward for the processor unit 502 to calculate an "effective" number of accumulated use-hours, deduct that from the announced 60 000 hours, and use the result as an estimate of a remaining service life.

After the processor unit 502 has estimated the remaining service lives of a subset of the node devices, it may begin comparing the estimates to each other. In accordance with the principle of optimizing life cycles in the sense described earlier, the processor unit 502 may generate, based on the estimated remaining service lives, at least one compensation rule determining updated node device operation. The generated compensation rule should aim at lowering power consumption during subsequent use of at least a first node device among the plurality of luminaires. Such a first node device would be one for which the respective estimated remaining service life was shorter than average. In other words, the compensation rule should aim at changing future use of such a node device, compared to its use so far, so that its estimated remaining service life would become longer.

As the main environmental factor that is here considered to shorten service lives of node devices is elevated temperature, the compensation rule should be one that would, when applied during subsequent use, make the node device run cooler than before. An example of such a compensation rule is described next with reference to fig. 6. It should be noted, however, that the compensation rule may be even simpler and involve a way of using a luminaire less than earlier, for example by switching on with longer delays and switching off with shorter delays than earlier.

The upper part of fig. 6 shows nine luminaires installed in a room. A common lighting controller (not shown) is arranged to use at least scenes to control the nine luminaires. As shown in the upper part of fig. 6, originally, a scene called Scene 1 involved the three rightmost luminaires emitting light at 80% brightness (see reference designators 601, 602, and 603) and all other luminaires in the room emitting light at 50% brightness (see e.g. reference designator 604). Use data, indicative of accumulated use of the nine luminaires, and temperature data, indicative of temperatures at which the accumulated use took place, is then collected. Based on the collected use data and temperature data, remaining service lives of all nine luminaires are estimated. In fig. 6 it is assumed that the estimated remaining service life of the middle rightmost luminaire was shorter than average. A compensation rule is then generated, determining an updated version of luminaire operation involved in Scene 1. As shown in the lower part of fig. 6, the updated luminaire operation involves the middle rightmost luminaire emitting light at 70% (instead of the original 80%) in response to a "Scene 1" command (see reference designator 606). This will most probably make it run at a lower temperature than earlier during Scene 1, resulting in a longer estimated remaining service life.

Users of the room might notice that the middle rightmost luminaire is not shining as brightly as before in Scene 1. In other words, the users might notice a reduced amount of light in the middle rightmost part of the room under Scene 1, and this may cause inconvenience. Such inconvenience can be at least partly mitigated by generating a further compensation rule, determining further updated luminaire operation that makes up for the otherwise reducing amount of light.

To this end, the processor unit 502 may be configured to generate, based on the estimated remaining service lives, at least one further compensation rule determining further updated node device operation, which further compensation rule aims at increasing power consumption during subsequent use of at least a second one of said plurality of node devices for which the respective estimated remaining service life was not as short as for the first one. In fig. 6, it is assumed that the estimated remaining service lives of the top and bottom rightmost luminaire, as well as that of the middle centre luminaire, were not as short as that of the middle rightmost luminaire. Consequently, the further compensation rule involves the top and bottom rightmost luminaires emitting light at 90% (instead of the original 80%) in response to a "Scene 1" command (see reference designators 605 and 607), and the middle centre luminaire emitting light at 60% (instead of the original 50%) in response to a "Scene 1" command (see reference designator 608).

To put any newly generated compensation rules into practice, they must be communicated to the appropriate devices. With reference to fig. 5, the processor unit 502 is configured to transmit the generated compensation rules through the communications unit 501. What device (s) will be the recipient (s) of the transmitted compensation rules depends on the control architecture of the building automation network. In a system like that of fig. 3, assuming that the arrangement of fig. 5 is implemented as a part of the remote management station 307, the compensation rules would be transmitted to the lighting controller 301 and/or to the appropriate luminaire(s) and/or other node device(s). Assuming that luminaires have their predetermined scene command responses stored in their own drivers, the effects of the compensation rules must eventually find their way to the drivers. Various techniques for later re-programming lighting devices are well known in the art, so they do not need to be described in more detail here.

Above, it was already explained that the processor unit 502 may have at its disposal at least one location data storage 505 configured to store location data indicative of at least relative locations of said plurality of node devices. In such a case, the processor unit 502 may be configured to use said location data in generating at least said compensation rule and possibly also said further compensation rule. The example of fig. 6 may take advantage of location data, because it is on the basis of such location data the processor unit 502 knows to select those luminaires that are best suited for increasing their "Scene 1" response level to make up for the otherwise decreasing lighting level in the rightmost part of the room.

However, in particular if the room is large and the luminaires are relatively high up in the ceiling, and/or if the node devices in question are of a kind that provides service to users with only weak association to a particular location. it may not be necessary to use location data, as improving the level of service like brightening some luminaire(s) (that or those for which the estimated remaining service life was longer) may make up adequately for the declining level of service like dimming of other luminaire(s) (that or those for which the estimated remaining service life was shorter) irrespective of whether they are close to each other or not. Operating in accordance with the principle described above with reference to fig. 6, in which location data is used, may be formally described as using location data to generate said compensation rule and said further compensation rule so that the increasing power consumption by the second node device causes improves level of service at a second area that at least partly coincides with a first area at which the lowering power consumption by the first node device weakens the level of service.

In the following, further examples of compensation rules are described, again with special emphasis of luminaires as node devices of a building automation system. In each example, it is assumed that the general aim of optimizing life cycles involves:
- compensation rules of the first kind, which aim at lowering power consumption during subsequent use of one or more first luminaires for which the respective estimated remaining service life was shorter than average, and
- compensation rules of the second kind, which aim at increasing power consumption during subsequent use of one or more second luminaires for which the estimated remaining service life was not as short.

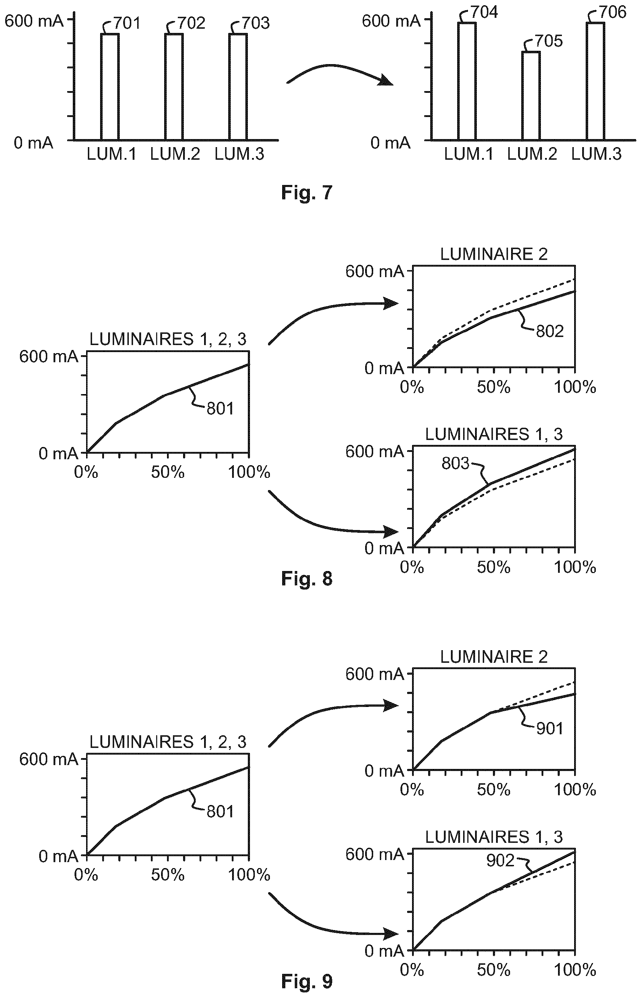

However, it should be noted that the compensation rules of the second kind are not necessarily needed but only used if there is an aim to make up for the decreasing amount of light that results from applying the compensation rules of the first kind. For easy comparison, in each of the examples of figs. 7 - 11 an imaginary case of three luminaires 1, 2, and 3 is assumed. Additionally, it is assumed that in each case, luminaire 2 was found to have a shorter estimated remaining service life than luminaires 1 and 3.

Fig. 7 illustrates an example in which a compensation rule of the first kind involves a lower lighting level when switched on. The three pillars in the left coordinate system in fig. 7 indicate the on-state electric current produced by the respective drivers of the three luminaires 1, 2, and 3. These three luminaires are assumed to be of the same type and, initially, their drivers have been configured to produce an on-state electric current of about 540 mA. As the amount of light emitted by led light sources is roughly proportional to the electric current produced by the respective driver, the left part of fig. 7 may be interpreted as illustrating the mutually equal lighting levels 701, 702, and 703 of the three luminaires when switched on. Correspondingly, the right part of fig. 7 illustrates the lighting levels 704, 705, and 706 of the three luminaires when switched on after compensation rules have been applied. The application of compensation rules has meant that the driver of luminaire 2 has been re-configured to produce an on-state electric current of about 470 mA, and the respective drivers of luminaires 1 and 3 have been re-configured to produce an on-state electric current of about 580 mA. Re-configuring a driver of a controllable luminaire to apply a new value of on-state current is a technique known as such and may be accomplished by, for example, sending an appropriate re-configuring command through a control bus or similar means of communication.

Fig. 6 above illustrated an example in which the application of compensation rules involved making one luminaire apply a lower lighting level 606 when operating as a part of a pre-programmed scene. Additionally, there were compensation rules of the second kind that made three luminaires apply a higher lighting level 605, 607, or 608 when operating as a part of a pre-programmed scene.

Fig. 8 illustrates an example in which the application of compensation rules involves a scaled-down dimming curve 802. Initially, the three luminaires 1, 2, and 3 had been configured to apply the same dimming curve 801, according to which dimming commands made the driver produce an output current in the following way: 100% - 560 mA, 50% - 300 mA, 15% - 150 mA, 0% - 0 mA, with the intervals therebetween interpolated linearly. The application of compensation rules has meant that the driver of luminaire 2 has been re-configured to apply a dimming curve 802 in which all current values are scaled down by 10% from their initial values. The respective drivers of luminaires 1 and 3 have been re-configured to apply a dimming curve 803 in which all current values are scaled up by 7% from their initial values. Re-configuring a driver of a controllable luminaire to apply a new dimming curve is a technique known as such and may be accomplished by, for example, sending an appropriate re-configuring command through a control bus or similar means of communication.

Fig. 9 illustrates an example in which the application of compensation rules involves a dimming curve with at least one lowered section. Initially, the three luminaires 1, 2, and 3 had been configured to apply the same dimming curve 801 as in fig. 8. The application of compensation rules has meant that the driver of luminaire 2 has been re-configured to apply a dimming curve 901 in which the section between dimming commands 50% and 100% is linearly lowered to reach a maximum value 10% lower than initially. The respective drivers of luminaires 1 and 3 have been re-configured to apply a dimming curve 902 in which the section between dimming commands 50% and 100% is linearly scaled up to reach a maximum value 7% higher than initially. Re-configuring a driver of a controllable luminaire to apply a new or partly new dimming curve is a technique known as such and may be accomplished by, for example, sending an appropriate re-configuring command through a control bus or similar means of communication.

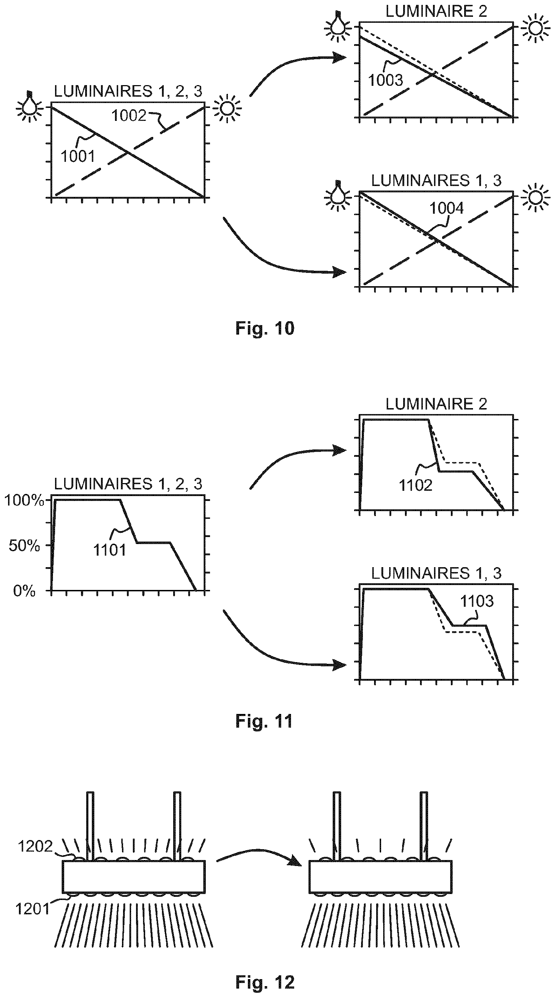

Fig. 10 illustrates an example in which the application of compensation rules involves an at least partly lower contribution to a combination of detected ambient light and artificial light emitted by the respective luminaire. The coordinate system on the left in fig. 10 illustrates how initially, the amount of emitted light is accurately inversely proportional (see graph 1001) to the amount of detected ambient light (see graph 1002) for all luminaires 1, 2, and 3. Such a principle is generally known as daylight harvesting and means that the sum of artificial light and ambient light would at each moment produce a constant amount of light available for users. The application of compensation rules has meant that the driver of luminaire 2 has been re-configured to apply a modified daylight harvesting relationship 1003 where the contribution of artificially produced light is smaller than before at least at certain values of detected ambient light. The respective drivers of luminaires 1 and 3 have been re-configured to apply a modified daylight harvesting relationship 1004 where the contribution of artificially produced light is larger than before at least at certain values of detected ambient light. Re-configuring a driver of a controllable luminaire to apply a new or partly new daylight harvesting relationship is a technique known as such and may be accomplished by, for example, sending an appropriate re-configuring command through a control bus or similar means of communication.

Fig. 11 illustrates an example in which the application of compensation rules involves a fading curve 1102 with at least one scaled-down section. The coordinate system on the left in fig. 11 illustrates how initially, the drivers of all three luminaires 1, 2, and 3 have been configured to apply the same fading curve 1101. Essentially, the fading curve 1101 shows how receiving an on-command, an indication of sensor-detected movement, or some corresponding impulse makes the driver increase its output current from 0% to 100% relatively quickly. The output current remains at 100% for a certain period but, at some point, as no further indications of required light are received, begins to gradually decrease towards 50%. In other words, the lights are dimmed down to a lower amount of emitted light. According to the fading curve 1101, the output current remains at 50% for another period of time, after which it gradually decreases to 0% if still no further indications are received that light would be needed.

In fig. 11, the application of compensation rules has meant that the driver of luminaire 2 has been re-configured to apply a modified fading curve 1102 with at least one scaled-down section. In this example, the whole falling part of the fading curve has been scaled down so that the first dimming down from 100% occurs more quickly, the intermediate lighting level is lower, and the final dimming down to 0% begins earlier. The respective drivers of luminaires 1 and 3 have been re-configured to apply a modified fading curve 1103 in which the first dimming down from 100% occurs more slowly, the intermediate lighting level is higher, and the final dimming down to 0% begins later. These are all just examples of ways in which a fading curve can be modified, and the skilled person can easily present various combinations and further developed versions of modifications.

Fig. 12 illustrates an example in which the application of compensation rules involves a lowered power directed to a part 1202 of light emitters 1201, 1202 included in the luminaire. In fig. 12, it is assumed that a luminaire hangs from the ceiling and comprises light emitters 1201 configured to emit light in a primary direction, like downwards, as well as light emitters 1202 configured to emit light in a secondary direction, like upwards. The purpose of the last-mentioned may be to provide indirect light in addition to the direct light provided by the first-mentioned. If the overall temperature of the (electronics included in the) luminaire is to be lowered during operation, it may be advisable to lower the power directed to the light emitters 1202 configured to emit light in the secondary direction, as a decreasing amount of indirect light may cause less irritation to users than a decreasing amount of direct light. Another example of similar kind is a luminaire that comprises light sources of different colours or colour temperatures, so that the emitted light is a combination of light emitted by the different light sources. A driver section of such a luminaire may comprise dedicated power converters for the light sources of different colours or colour temperatures. If the default combination of produced light is not balanced between the light sources of different colours or colour temperatures, it may result in one of the power converters running at a significantly higher power, causing higher operating temperatures. In such a case, applying a compensation rule may involve a lowered power directed to those of the light emitters that previously received higher power. If needed, the resulting decrease in the overall amount of emitted light may be compensated with an increased power directed to those of the light emitters that previously received lower power. In an example of a so-called tunable white luminaire, in which led light sources of colour temperatures 2700 K and 6500 K are used to produce light at a desired overall colour temperature, this may mean a change to produce light at a fixed, balanced colour temperature of 4600 K, for example.

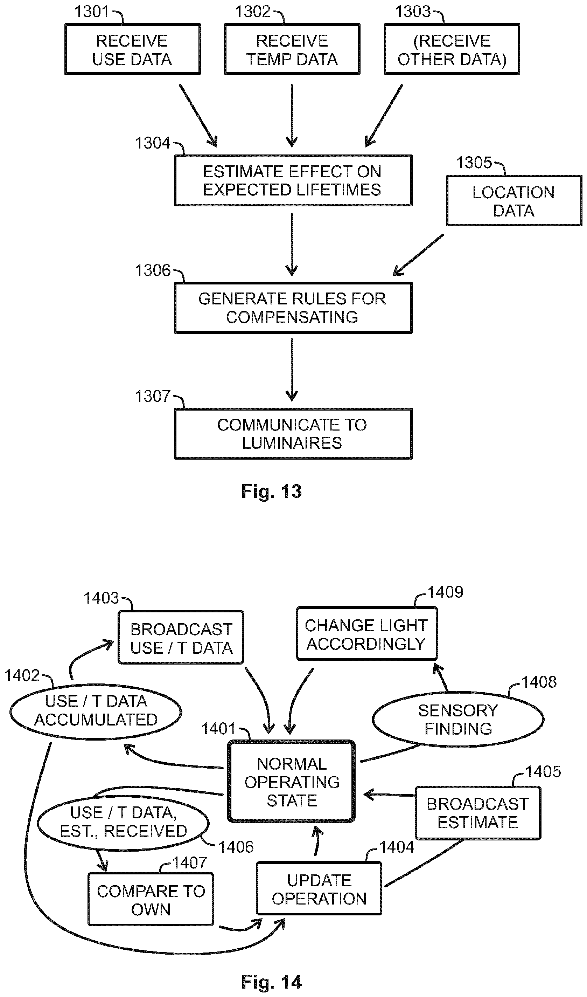

Above, it has been noted already that a method that aims at optimizing life cycles of node devices in a way described in this text can be executed using various devices and device combinations involved in a building automation system. Fig. 13 illustrates schematically a method that is mainly applicable for execution in a centralized controlling device, like the lighting controllers 301 and 401 or remote management stations 307 and 405 of figs. 3 and 4, respectively. Step 1301 comprises receiving and storing use data indicative of accumulated use of a plurality of node devices, and step 1302 comprises receiving and storing temperature data indicative of temperatures at which said accumulated use took place. Step 1302 is optional if the estimation of remaining service lives is to be made on basis of accumulated use-hours only There is a further optional step 1303 that may comprise receiving and storing other data, which here means information indicative of other environmental conditions than temperature that may also affect the ageing of electronics, like humidity, radiation, or vibration.

Step 1304 in fig. 13 comprises estimating, based on said use data (and possibly said temperature data, and possibly other data received at step 1303), remaining service lives of at least a subset of said plurality of node devices. As already explained above, such estimating is typically based on previously accumulated and/or intelligently predicted knowledge about how use (at various temperatures and other detected environmental conditions) affects the ageing of electronics of the pertinent kind.

Step 1306 in fig. 13 comprises generating, based on said estimated remaining service lives, at least one compensation rule determining updated node device operation. The compensation rule should aim at lowering power consumption during subsequent use of at least a first one of said plurality of node devices for which the respective estimated remaining service life was shorter than average. Step 1306 may also comprise generating, based on said estimated remaining service lives, at least one further compensation rule determining further updated node device operation, which further compensation rule would be of the kind that aims at increasing power consumption during subsequent use of at least a second one of said plurality of node devices for which the respective estimated remaining service life was not as short as for the first one.

Fig. 13 also illustrates an optional step 1305 of using location data of said plurality of node devices to generate said compensation rule and/or said further compensation rule. The use of location data, if accomplished, should aim at mitigating at least some of the adverse effects that users might otherwise experience due to the application of the compensation rules. For example, location data could reveal the neighbour relations of the node devices so that the increasing power consumption power by the second node device could cause improving level of service at a second area that at least partly coincides with a first area at which the lowering power consumption by the first node device weakens the level of service.

Step 1307 in fig. 13 involves transmitting the generated compensation rule(s) to the node device(s) at which they should be applied.

Fig. 14 illustrates a variation of the method. The method of fig. 14 is based on the same principle of optimizing life cycles but may be more easily applicable for example in one of the relatively independently operating node devices of fig. 4. As a consequence, the method of fig. 14 could be called a method for controlling a node device as a part of a building automation network. A device configured to execute the method of fig. 14 may still have the basic functional appearance illustrated above in fig. 5, with possibly some modifications that are easily understood from the following description of the method.

In fig. 14, it is assumed that there is a normal operating state 1401 of the luminaire or other node device. Continuously or intermittently, there occurs a step 1402 of storing use data indicative of accumulated use of the node device. In fig. 14, it is assumed that temperature data is stored as well, indicative of temperatures at which said accumulated use took place, but this is optional. In fig. 14, it is assumed that the node device also broadcasts, at least at certain intervals, its own accumulated use data (and temperature data), as shown in step 1403. The purpose of such broadcasting, if accomplished, is to enable other node devices in the same building automation system to compare the estimated remaining service lives of each other for the purpose of deciding, what kind of compensation rules should be applied to achieve the general aim of optimizing life cycles across the building automation system.

As shown with a possible transition from step 1402 to step 1404 in fig. 14, the method may comprise estimating, based on the accumulated use data (and temperature data), a remaining service life of the node device. Step 1404 may comprise also generating, based on said estimated remaining service life, at least one compensation rule determining updated node device operation. The compensation rule, if generated, should aim at changing power consumption during subsequent use of the node device in a direction that changes the estimated remaining service life towards a target value. Notably, this may take place irrespective of whether the node device has use data (and temperature data, and/or estimated remaining service lives) of other node devices at its disposal. Namely, it is possible that a default length of a service life has been stored as preliminary information to a memory of the node device. At step 1404, the node device may compare its estimated remaining service life to what it should have remaining of its default service life judging by the accumulated use-hours only. If the estimated remaining service life is shorter, a compensation rule of the kind described above can be generated.

Irrespective of whether the node device broadcast its use data and temperature data in accordance with step 1403, it may broadcast information indicative of its estimated remaining service life as in step 1405. In any case, a return to the normal operating state 1401 occurs, however with the difference that normal operation now involves controlling operation of the node device in accordance with the newly generated compensation rule.

As shown with step 1406 in fig. 14, the node device may receive use data, temperature data, and/or information indicative of estimated remaining service lives from other node devices in the building automation system. In such a case, the method may involve a step 1407 in which the node device compares the received information and/or any conclusions it can draw based thereon to what it has itself found out so far concerning its own estimated remaining service life. If the comparison shows that its own estimated remaining service life differs significantly from those of other node devices, it may take this into account when generating compensation rules in step 1404. For example, if the received information shows that its own estimated remaining service life if significantly longer than those of other node devices, it may even generate a compensation rule that aims at adding its own power consumption during subsequent use, in order to change its own estimated remaining service life towards those of the other node devices. Correspondingly, if the received information shows that its own estimated remaining service life if significantly shorter than those of other node devices, it may have a good reason to generate a compensation rule that aims at decreasing its own power consumption during subsequent use, again in order to change its own estimated remaining service life towards those of the other node devices.

The generation of compensation rules at step 1404 may comprise taking into account known relative locations of the node device and other node devices. For example, if the information received from other node devices indicates that a neighbouring node device (or a node device that is at least within some predetermined distance) is about to apply a compensation rule decreasing power consumption, the node device executing the method of fig. 14 may decide to apply a compensation rule increasing its own power consumption, in order to make up for the otherwise declining level of service available to users. If the node devices have been configured to know the locations of each other, evaluation of the need for such making up for declining level of service may take into account the actual mutual distances. In a wireless mesh network in which relayed transmissions between nodes include a hop count, the evaluation of mutual distance may be based on the hop count. Additionally, or alternatively, in any wireless network the evaluation of mutual distance may be based on the strength, S/N ratio, or other measure of quality of the received signal.

Taking location data into account in a device configured to execute a method like that of fig. 14 may be characterised so that the device is configured to examine information received from said other node devices for indications of physical closeness of said other node devices, and weigh said information received from said other node devices of said building automation network the more in said generating of the compensation rule the closer said other node devices are according to said indications of physical closeness.

The compensation rules that the ndoe device may generate at step 1404 may be of the same kind as those that have been described earlier. If the node device is a luminaire, compensation rules may be for example of the kind explained earlier with reference to figs. 6 to 12.

As a part of the method of fig. 14, there are shown the possible steps of receiving sensory findings at step 1408 and changing the emitted light accordingly at step 1409. These serve as a reminder that a luminaire acting as a node device may apply, for example, daylight harvesting as shown in fig. 11 and/or motion detector triggered operation as shown in fig. 12. In such a case, any generated compensation rule may have an effect on the way in which these control strategies are implemented, as explained earlier in this text.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. An arrangement for controlling a plurality of node devices of a building automation network, the arrangement comprising:
- a communications unit (501) configured to receive and transmit data,
- a processor unit (502) coupled to said communications unit (501), and
- at the disposal of the processor unit (502), one or more data storages (503) configured to store received use data indicative of accumulated use of said plurality of node devices;
**characterized in that** the processor unit (502) is configured to:
- estimate (1304), based on said received use data, remaining service lives of at least a subset of said plurality of node devices,
- generate (1306), based on said estimated remaining service lives, at least one compensation rule determining updated node device operation, which compensation rule aims at lowering power consumption during subsequent use of at least a first one of said plurality of node devices for which the respective estimated remaining service life was shorter than average, and
- transmit (1307) the generated compensation rule through said communications unit (501).

2. An arrangement according to claim 1, wherein:
- the arrangement comprises, at the disposal of the processor unit (502), one or more data storages (504) configured to store received temperature data indicative of temperatures at which said accumulated use took place, and
- the processor unit (502) is configured to perform said estimating (1304) of remaining service lives of at least a subset of said plurality of node devices based also on said received temperature data.

3. An arrangement according to claim 1 or 2, wherein the processor unit (502) is configured to:
- generate (1306), based on said estimated remaining service lives, at least one further compensation rule determining further updated node device operation, which further compensation rule aims at increasing power consumption during subsequent use of at least a second one of said plurality of node devices for which the respective estimated remaining service life was not as short as for the first one, and
- transmit (1307) the generated further compensation rule through said communications unit (501).

4. An arrangement according to any of the preceding claims, wherein:
- the arrangement comprises, at the disposal of the processor unit (502), at least one location data storage (505) configured to store location data indicative of at least relative locations of said plurality of node devices, and
- the processor unit (502) is configured to use said location data in generating at least said compensation rule.

5. An arrangement according to claim 4, when depending on claim 3, wherein the processor unit (502) is configured to use said location data to generate said compensation rule and said further compensation rule so that the increasing power consumption by the second node device causes improved level of service at a second area that at least partly coincides with a first area at which the lowering power consumption by the first node device weakens level of service.

6. An arrangement according to any of the preceding claims, wherein said node devices are luminaires and said compensation rule involves at least one of:
- a lower lighting level (705) when switched on,
- a lower lighting level (606) when operating as a part of a pre-programmed scene,
- a scaled-down dimming curve (802),
- a dimming curve with at least one lowered section (901),
- at least partly lower contribution (1003) to a combination of detected ambient light and artificial light emitted by the first one of said plurality of luminaires,
- a fading curve (1102) with at least one scaled-down section, or
- a lowered power directed to a part (1202) of light emitters (1201, 1202) included in the first one of said plurality of luminaires.

7. A device for controlling a node device, for operation as a part of a building automation network, the device comprising:
- a processor unit (502) and
- at the disposal of the processor unit (502), one or more data storages (503) configured to store use data indicative of accumulated use of said node device,
**characterized in that** the processor unit (502) is configured to:
- estimate (1304), based on said use data, remaining service life of said node device,
- generate (1306), based on said estimated remaining service life, at least one compensation rule determining updated node device operation, which compensation rule aims at changing power consumption during subsequent use of said node device in a direction that changes the estimated remaining service life towards a target value, and
- control operation of said node device in accordance with said compensation rule.

8. A device according to claim 7, wherein:
- the device comprises, at the disposal of the processor unit (502), one or more data storages (504) configured to store temperature data indicative of temperatures at which said accumulated use took place, and
- the processor unit (502) is configured to perform said estimating of remaining service life of said nod device also based on said temperature data.

9. A device according to claim 8, wherein:
- the device comprises, coupled to said processor unit (502), a communications unit (501) configured to receive and transmit data,
- the processor unit (502) is configured to transmit information indicative of at least one of:
-- said use data and said temperature data, or
-- said estimated remaining service life,
- the processor unit (502) is configured to receive at least one of:
-- information indicative of use data and temperature data transmitted by other node devices of said building automation network,
-- information indicative of estimated remaining service lives transmitted by other node devices of said building automation network,
- the processor unit (502) is configured to base said generating of the compensation rule at least partly on the information received from said other node devices of said building automation network.

10. A device according to claim 9, wherein said processor unit (502) is configured to:
- examine said information received from said other node devices for indications of physical closeness of said other luminaires, and
- weigh said information received from said other node devices of said building automation network the more in said generating of the compensation rule the closer said other node devices are according to said indications of physical closeness.

11. A method for controlling a plurality of node devices of a building automation network, the method comprising:
- receiving (1301) and storing use data indicative of accumulated use of said plurality of node devices,
- estimating (1304), based on said use data, remaining service lives of at least a subset of said plurality of node devices,
- generating (1306), based on said estimated remaining service lives, at least one compensation rule determining updated node device operation, which compensation rule aims at lowering power consumption during subsequent use of at least a first one of said plurality of node devices for which the respective estimated remaining service life was shorter than average, and
- transmitting (1307) the generated compensation rule to said first one of said plurality of node devices.

12. A method according to claim 11, wherein:
- the method comprises receiving (1302) and storing temperature data indicative of temperatures at which said accumulated use took place, and
- said estimating of remaining service lives of at least a subset of said plurality of node devices is also based on said temperature data.

13. A method according to claim 11 or 12, comprising:
- generating (1306), based on said estimated remaining service lives, at least one further compensation rule determining further updated node device operation, which further compensation rule aims at increasing power consumption during subsequent use of at least a second one of said plurality of node devices for which the respective estimated remaining service life was not as short as for the first one, and
- transmitting (1307) the generated further compensation rule to said second one of said plurality of node devices.

14. A method according to claim 13, comprising the use of location data of said plurality of node devices to generate said compensation rule and said further compensation rule so that the increasing power consumption power by the second node device causes improving level of service at a second area that at least partly coincides with a first area at which the lowering power consumption by the first node device weakens level of service.

15. A method according to any of claims 11 to 14, wherein the node devices are luminaires and said compensation rule involves at least one of:
- a lower lighting level (705) when switched on,
- a lower lighting level (606) when operating as a part of a pre-programmed scene,
- a scaled-down dimming curve (802),
- a dimming curve with at least one lowered section (901),
- at least partly lower contribution (1003) to a combination of detected ambient light and artificial light emitted by the first one of said plurality of luminaires,
- a fading curve (1102) with at least one scaled-down section, or
- a lowered power directed to a part (1202) of light emitters (1201, 1202) included in the first one of said plurality of luminaires.

16. A method for controlling a node device for operation as a part of a building automation network, the method comprising:
- storing (1402) use data indicative of accumulated use of said node device,
- estimating (1404), based on said use data, remaining service life of said node device,
- generating (1404), based on said estimated remaining service life, at least one compensation rule determining updated node device operation, which compensation rule aims at changing power consumption during subsequent use of said node device in a direction that changes the estimated remaining service life towards a target value, and
- controlling operation (1401) of said node device in accordance with said compensation rule.

17. A method according to claim 16, wherein:
- the method comprises storing (1402) temperature data indicative of temperatures at which said accumulated use took place, and
- said estimating of remaining service life is also based on said temperature data.

18. A method according to any of claims 16 or 17, comprising:
- transmitting information indicative of at least one of:
-- said use data and said temperature data, or
-- said estimated remaining service life,
- receiving at least one of:
-- information indicative of use data and temperature data transmitted by other node devices of said building automation network,
-- information indicative of estimated remaining service lives transmitted by other node devices of said building automation network, and
- basing said generating of the compensation rule at least partly on the information received from said other node devices of said building automation network.

19. A method according to any of claims 16 to 18, wherein said node device is a luminaire and compensation rule involves at least one of:
- a lower lighting level (705) when switched on,
- a lower lighting level (606) when operating as a part of a pre-programmed scene,
- a scaled-down dimming curve (802),
- a dimming curve with at least one lowered section (901),
- a lowered power directed to a part (1002) of light emitters (1001, 1002) included in the luminaire or
- at least partly lower contribution (1103) to a combination of detected ambient light and artificial light emitted by the luminaire.
